# EUROPÄISCHE PATENTSCHRIFT

(11) **EP 3 272 455 B1**
(45) Veröffentlichungstag und Bekanntmachung des Hinweises auf die Patenterteilung: **26.05.2021**
(21) Anmeldenummer: 16180394.5
(22) Anmeldetag: 20.07.2016
(51) Int. Cl.: B23Q 1/44, B23Q 1/62, B23Q 5/36

(54) **BEARBEITUNGSEINHEIT ZUR SPANENDEN BEARBEITUNG VON WERKSTÜCKEN**
MACHINING UNIT FOR MACHINING WORKPIECES
UNITE D'USINAGE PAR ENLÈVEMENT DE COPEAUX

(43) Veröffentlichungstag der Anmeldung: 24.01.2018
(73) Patentinhaber: AFW Holding GmbH, 4656 Kirchham (AT)
(72) Erfinder: WEINGÄRTNER, Dominik, 4643 Pettenbach (AT)
(74) Vertreter: Hafner & Kohl PartmbB

(56) Entgegenhaltungen:
- WO-A1-02/02281
- DE-A1-102006 025 197
- DE-C- 703 369
- Engel Michael: "Flächenmotor macht Maschinen schneller (Archiv)", , 28. Januar 2013 (2013-01-28), Seiten 1-3, XP055337392, Gefunden im Internet: URL:http://www.deutschlandfunk.de/flaechen motor-macht-maschinen-schneller.676.de.htm l?dram:article_id=235607 [gefunden am 2017-01-20]
- Prof. Dr. Berend Denkena ET AL: "Antriebstechnik: Was hinter dem Konzept des Flächenmotors steckt - computer-automation.de", , 22. März 2013 (2013-03-22), Seiten 1-4, XP055337398, Gefunden im Internet: URL:http://www.computer-automation.de/feld ebene/antriebe/artikel/96045/ [gefunden am 2017-01-20]

## Beschreibung

Die Erfindung betrifft eine Vorrichtung zur spanenden Bearbeitung, insbesondere zum Drehen und/oder Fräsen, von, insbesondere länglichen, Werkstücken, insbesondere Wellen.

Bearbeitungseinheiten zur spanenden Bearbeitung, insbesondere zum Drehen und/oder Fräsen, von, insbesondere länglichen, Werkstücken, wie insbesondere Wellen, sind dem Grunde nach bekannt. Entsprechende Bearbeitungseinheiten werden bestimmungsgemäß in Vorrichtungen zur spanenden Bearbeitung von Werkstücken eingesetzt. Bei entsprechenden Vorrichtungen kann es sich z. B. um, gegebenenfalls kombinierte, Dreh- und/oder Fräsanlagen bzw. -maschinen, handeln.

Bei der spanenden Werkstückbearbeitung, insbesondere bei Fräsvorgängen, z. B. zur Ausbildung von Nuten, können zur Reduzierung von Bearbeitungszeit und Werkzeugverschleiß kombinierte Bewegungen des Bearbeitungswerkzeugs in unterschiedlichen Bewegungsbahnen bzw. Bewegungsachsen zweckmäßig sein. Zur Realisierung solch kombinierter Bewegungen ist es bis dato üblich, die gesamte Bearbeitungseinheit in eine entsprechende Bewegung relativ zu dem zu bearbeitenden Werkstück zu versetzen. Die Realisierung entsprechender Bewegungen ist aufgrund des hohen Gewichts entsprechender Bearbeitungseinheiten mit vergleichsweise großem Aufwand verbunden. Die Realisierung komplexer, gegebenenfalls dynamisch variierender, Bewegungsbahnen bzw. -profile ist mit der geforderten Präzision nur schwer möglich

WO 02/02281 A1 offenbart eine Vorrichtung mit einer Bearbeitungseinheit zur spanenden Bearbeitung von Werkstücken, einer mit der Bearbeitungseinheit gekoppelten Vorschubeinrichtung, wobei die Bearbeitungseinrichtung umfasst:
- ein Bearbeitungswerkzeug, wobei das Bearbeitungswerkzeug in einer Bewegungsebene in wenigstens zwei unterschiedlichen, insbesondere kombinierten, Bewegungsbahnen bewegbar ist,
- wenigstens eine Antriebseinheit, welche zur kombinierten Bewegung des Bearbeitungswerkzeugs in einer ersten Bewegungsbahn X und in einer von der ersten Bewegungsbahn unterschiedlichen zweiten Bewegungsbahn (Y) eingerichtet ist, wobei das Bearbeitungswerkzeug relativ zu der Vorschubeinheit in den wenigstens zwei unterschiedlichen Bewegungsbahnen bewegbar ist.

Der Erfindung liegt die Aufgabe zugrunde, eine demgegenüber verbesserte Bearbeitungseinheit zur spanenden Bearbeitung von Werkstücken anzugeben.

Die Aufgabe wird durch eine Vorrichtung gemäß Anspruch 1 gelöst. Die hierzu abhängigen Ansprüche betreffen besondere Ausführungsformen der Vorrichtung.

Die hierin beschriebene Bearbeitungseinheit dient zur spanenden Bearbeitung von Werkstücken. Unter dem Begriff "spanende Bearbeitung" ist insbesondere ein Drehen und/oder Fräsen zu verstehen. Der Begriff "spanende Bearbeitung" umfasst sonach Drehvorgänge, Fräsvorgänge sowie kombinierte Dreh-/Fräsvorgänge bzw. kombinierte Fräs-/Drehvorgänge. Bei den mit der Bearbeitungseinheit spanend zu bearbeitenden Werkstücken handelt es sich insbesondere um längliche, insbesondere zylindrische, Bauelemente, wie z. B. Wellenelemente, kurz Wellen, oder um scheibenartige bzw. -förmige Bauelemente. Entsprechende Bauelemente werden u. a. im Bereich der Antriebstechnik, z. B. als Antriebswellen motorischer Antriebseinrichtungen, der Fördertechnik, z. B. als Pumpenelemente von Pumpeneinrichtungen, der Energietechnik, z. B. als Rotornabenelemente für Turbinenschaufeln von Turbineneinrichtungen, oder der Materialverarbeitungstechnik, z. B. als Schneckenelemente von Extrusions- oder Spritzgießeinrichtungen, eingesetzt. Die vorstehende Aufzählung ist beispielhaft zu verstehen und daher nicht abschließend.

Die Bearbeitungseinheit umfasst wenigstens ein Bearbeitungswerkzeug. Das Bearbeitungswerkzeug ist in einer Bewegungsebene in einer ersten Bewegungsbahn und in einer zu der ersten Bewegungsbahn unterschiedlichen zweiten Bewegungsbahn, mithin in wenigstens zwei unterschiedlichen, gleichwohl gegebenenfalls kombinierbaren bzw. kombinierten, Bewegungsbahnen bewegbar. Die Bewegungsebene kann durch die wenigstens zwei unterschiedlichen Bewegungsbahnen definiert sein. Die Bewegungsebene ist kann horizontal oder bezüglich einer, z. B. horizontalen, Referenzebene geneigt bzw. schräg ausgerichtet sein. In letzterem Fall lassen sich, insbesondere in Längsrichtung eines spanend zu bearbeitenden Werkstücks, je nach Blickrichtung ansteigende bzw. abfallende Nutgeometrien realisieren. Die Bewegungsebene kann zudem zumindest abschnittsweise, gegebenenfalls vollständig, gebogen, gekrümmt oder gewölbt verlaufen.

Wie sich im Weiteren ergibt, ist eine entsprechende Bewegungsbahn insbesondere eine lineare Bewegungsachse; eine entsprechende Bewegungsbahn kann sonach eine lineare Bewegungsachse beschreiben. Anzumerken ist jedoch, dass eine Bewegungsbahn prinzipiell auch (in der Bewegungsebene) unterschiedlich ausgerichtete bzw. orientierte Bewegungsbahnabschnitte, d. h. beispielsweise zumindest abschnittsweise gebogen bzw. gekrümmt oder zumindest abschnittsweise gewinkelt bzw. schräg verlaufende Bewegungsbahnabschnitte, umfassen kann.

Wesentlich für die hierin beschriebene Bearbeitungseinheit ist, dass bezogen auf das "System Bearbeitungseinheit" Bewegungen des Bearbeitungswerkzeugs relativ zu der Bearbeitungseinheit bzw. einem dieser zugehörigen Gehäuseteil der Bearbeitungseinheit, an oder in welchem die wesentlichen Funktionskomponenten, wie u. a. das Bearbeitungswerkzeug, angeordnet oder ausgebildet sind, erfolgen. Das Bearbeitungswerkzeug ist sonach relativ zu der Bearbeitungseinheit bzw. einem dieser zugehörigen Gehäuseteil in den wenigstens zwei unterschiedlichen Bewegungsbahnen bewegbar (gelagert). Bewegungen des Bearbeitungswerkzeugs (relativ zu einem zu bearbeiteten Werkstück) können damit unabhängig bzw. entkoppelt von gegebenenfalls (zusätzlichen bzw. überlagerten) Bewegungen der gesamten Bearbeitungseinheit (relativ zu einem zu bearbeiteten Werkstück) erfolgen. Im Gegensatz zu den typischerweise komplexen, aus einer Kombination der beiden unterschiedlichen Bewegungsbahnen resultierenden, z. B. trochoidalen (trochoiden) bzw. zykloiden, Bewegungen des Bearbeitungswerkzeugs handelt es sich bei einer etwaigen Bewegung der gesamten Bearbeitungseinheit typischerweise um eine einfache lineare Bewegung zur Realisierung eines Vorschubs der Bearbeitungseinheit entlang einer zu bearbeitenden Werkstückoberfläche. Entsprechende Vorschubbewegungen sind z. B. von Fräsvorgängen bekannt.

Im Gegensatz zu dem eingangs dargestellten Stand der Technik ist es im Rahmen der bestimmungsgemäßen Verwendung der Bearbeitungseinheit zur spanenden Bearbeitung von Werkstücken also nicht notwendig, die gesamte Bearbeitungseinheit in komplexe, gegebenenfalls aus einer Kombination der beiden unterschiedlichen Bewegungsbahnen resultierende Bewegungen zu versetzen. Es wird lediglich das Bearbeitungswerkzeug in entsprechende Bewegungen versetzt. Die zu bewegenden Massen sind damit erheblich reduziert, was die Realisierung komplexer, gegebenenfalls dynamisch variierender, Bewegungsbahnen bzw. -profile mit hoher Präzision ermöglicht.

Zur Realisierung von Bewegungen des Bearbeitungswerkzeugs umfasst die Bearbeitungseinheit wenigstens eine Antriebseinheit. Die Antriebseinheit ist dem Bearbeitungswerkzeug funktionell zugeordnet und als Funktionskomponente der Bearbeitungseinheit funktionell bzw. konstruktiv in diese integriert. Sofern die Bearbeitungseinheit eine (einzige) Antriebseinheit umfasst, ist diese Antriebseinheit zur, gegebenenfalls kombinierten, Bewegung des Bearbeitungswerkzeugs in der ersten Bewegungsbahn und in der zweiten Bewegungsbahn eingerichtet.

Selbstverständlich kann die Bearbeitungseinheit auch mehrere (gesonderte) Antriebseinheiten umfassen. Insbesondere kann die Bearbeitungseinheit zwei gesonderte Antriebseinheiten umfassen. Die Antriebseinheiten sind wiederum dem Bearbeitungswerkzeug funktionell zugeordnet und als Funktionskomponenten der Bearbeitungseinheit funktionell bzw. konstruktiv in diese integriert. Eine erste Antriebseinheit oder eine Gruppe mehrerer erster Antriebseinheiten ist/sind zur Bewegung des Bearbeitungswerkzeugs in der ersten Bewegungsbahn eingerichtet. Eine zweite Antriebseinheit oder eine Gruppe mehrerer zweiter Antriebseinheiten ist/sind zur Bewegung des Bearbeitungswerkzeugs in der zweiten Bewegungsbahn eingerichtet.

Die Antriebseinheit(en) kann bzw. können jeweils z. B. als, insbesondere elektrische, Antriebsmotoren ausgebildet sein bzw. wenigstens einen solchen Antriebsmotor umfassen. Bei entsprechenden Antriebsmotoren kann es sich konkret z. B. um Servo- oder Linearmotoren handeln. Bei nur einer einzigen Antriebseinheit ist diese insbesondere als Flächenmotor, welcher zur Bewegung des Bearbeitungswerkzeugs in zwei unterschiedlichen Bewegungsbahnen eingerichtet ist, ausgebildet. Die Energieversorgung jeweiliger Antriebseinheiten kann über mit diesen verbundene, von einer (elektrischen) Energieversorgungsquelle, insbesondere einem Energieversorgungsnetz, ausgehende Energieversorgungsleitungen erfolgen.

Wie erwähnt, kann die erste Bewegungsbahn eine, typischerweise horizontal ausgerichtete, erste lineare Bewegungsachse oder eine erste lineare Anteile beinhaltende Bewegungsachse sein oder beschreiben. Eine erste Bewegungsachse kann insbesondere quer zu einer Längsachse eines spanend zu bearbeitenden (länglichen) Werkstücks verlaufen. Die Antriebseinheit - bzw. für den Fall mehrerer Antriebseinheiten - eine erste Antriebseinheit kann entsprechend eingerichtet sein, das Bearbeitungswerkzeug in der bzw. entlang ersten Bewegungsachse zu bewegen. Die zweite Bewegungsbahn kann eine, typischerweise ebenso horizontal ausgerichtete, zweite lineare Bewegungsachse oder eine zweite lineare Anteile beinhaltende Bewegungsachse sein oder beschreiben. Eine zweite Bewegungsachse kann insbesondere parallel zu der Längsachse des spanend zu bearbeitenden (länglichen) Werkstücks verlaufen. Die Antriebseinheit - bzw. für den Fall mehrerer Antriebseinheiten - eine zweite Antriebseinheit kann entsprechend eingerichtet sein, das Bearbeitungswerkzeug in der bzw. entlang zweiten Bewegungsachse zu bewegen. Die erste und die zweite Bewegungsachse sind typischerweise winklig, insbesondere rechtwinklig, zueinander ausgerichtet bzw. orientiert.

Zur Realisierung kombinierter Bewegungen des Bearbeitungswerkzeugs in der Bewegungsebene ist der Bearbeitungseinheit eine hard- und/oder softwaremäßig implementierte Steuereinrichtung zuordenbar bzw. zugeordnet. Die Steuereinrichtung ist entsprechend hard- und/oder softwaremäßig eingerichtet, die Antriebseinheit bzw. gegebenenfalls die erste und die zweite Antriebseinheit, zur Realisierung kombinierter Bewegungen des Bearbeitungswerkzeugs in der Bewegungsebene anzusteuern. Wie erwähnt, kann es sich bei kombinierten Bewegungen insbesondere um trochoidale bzw. zykloide Bewegungen des Bearbeitungswerkzeugs in der Bewegungsebene handeln. Unter trochoidalen bzw., gegebenenfalls verlängerten, zykloiden Bewegungen des Bearbeitungswerkzeugs, d. h. insbesondere eines diesem zugehörigen, weiter unten näher erläuterten, mit Werkzeugschneiden versehenen Werkzeugelements, sind insbesondere exzentrische kreis- oder kreissegmentförmige Bewegungen des Bearbeitungswerkzeugs zu verstehen. Derartige Bewegungen können wie die Projektion einer gescherten Spirale auf eine Grundfläche verlaufen. Kombinierte Bewegungen können auch lineare Anteile beinhalten und sonach z. B. einen Teilkreis, insbesondere Halbkreis, beschreiben. Die Steuereinrichtung kann eine Funktionskomponente der Bearbeitungseinheit darstellen, d. h. ebenso an oder in dem Gehäuseteil angeordnet oder ausgebildet sein.

Das Bearbeitungswerkzeug kann wenigstens ein um eine Werkzeugelementachse, insbesondere um eine Werkzeugelementlängsachse, drehbares, wenigstens eine Werkzeugschneide umfassendes Werkzeugelement umfassen. Bei dem Werkzeugelement kann es sich z. B. um ein Fräswerkzeug, kurz Fräser, insbesondere um einen Schrupp- oder Schlichtfräser, handeln. Je nach geometrisch-konstruktiver Gestaltung des Werkzeugelements können entsprechende Werkzeugschneiden zumindest abschnittsweise an Mantel- und/oder Stirnflächen des Werkzeugelements ausgebildet sein. Das Werkzeugelement ist zumindest im Bereich der Werkzeugschneiden aus geeigneten Schneidwerkstoffen, d. h. z. B. Schnellarbeitsstählen, Hartmetallen, Keramik, Diamant oder Bornitrid (CBN), gebildet.

Das Werkzeugelement kann zumindest abschnittsweise, insbesondere vollständig, eine längliche, insbesondere kegelartig bzw. -förmig zulaufende oder zylindrische, Geometrie bzw. Grundform aufweisen. Ein Werkzeugelement mit einer kegelartig bzw. -förmig zulaufenden Geometrie ist zur Ausbildung von kegelartig bzw. -förmig zulaufenden Nuten bzw. kegelartig bzw. -förmig zulaufenden nutartigen Oberflächenstrukturierungen in einem zu bearbeitenden Werkstück zweckmäßig.

Ein längliches Werkzeugelement kann z. B. wenigstens eine in Längsrichtung verjüngte, insbesondere hinterschnittene, oder erweiterte Konturierung aufweisen. Durch eine entsprechende Konturierung ist die Ausbildung entsprechend konturierter Nuten bzw. nutartiger Oberflächenstrukturierungen möglich. In Kombination mit der vorgenannten kegelartig bzw. -förmig zulaufenden Geometrie lassen sich z. B. tannenbaum- oder schwalbenschwanzförmige Strukturen, d. h. sogenannte Tannenbaum- oder Schwalbenschwanznuten, realisieren, welche z. B. für Rotornabenelemente zur Halterung von Turbinenschaufeln zweckmäßig sind.

Die geometrisch-konstruktive Gestaltung bzw. die Formgebung des Werkzeugelements ist grundsätzlich im Hinblick auf die bei bestimmungsgemäßer Verwendung der Bearbeitungseinheit jeweils werkstückseitig auszubildenden Konturen gewählt.

Die Bearbeitungseinheit kann eine, insbesondere flanschartig ausgebildete, Befestigungsschnittstelle zur (beschädigungs- bzw. zerstörungsfrei) lösbaren Befestigung der Bearbeitungseinheit an einer, insbesondere korrespondierenden, Befestigungsschnittstelle einer Funktionseinheit einer die Bearbeitungseinheit aufnehmenden Vorrichtung zur spanenden Bearbeitung von Werkstücken aufweisen. Bei einer entsprechenden vorrichtungsseitigen Funktionseinheit kann es sich z. B. um eine Vorschubeinrichtung zur Realisierung eines Vorschubs der Bearbeitungseinheit entlang der Oberfläche eines zu bearbeitenden Werkstücks handeln. Durch die Lösbarkeit der Befestigung ist eine einfache und schnelle Montage bzw. Demontage der gesamten Bearbeitungseinheit an bzw. von einer entsprechenden Vorrichtung, d. h. ein einfacher und schneller Austausch bzw. Wechsel von Bearbeitungseinheiten möglich.

Die Bearbeitungseinheit kann über das, insbesondere mechanische, Zusammenwirken der bearbeitungseinheitseitigen Befestigungsschnittstelle mit der vorrichtungsseitigen Befestigungsschnittstelle z. B. form- und/oder kraftschlüssig an der Funktionseinheit der Vorrichtung befestigt sein. Seitens der jeweiligen Befestigungsschnittstellen sind sonach geeignete Befestigungsabschnitte bzw. -elemente vorhanden, welche eine lösbare, z. B. form- und/oder kraftschlüssige, Befestigung der Bearbeitungseinheit an der vorrichtungsseitigen Funktionseinheit ermöglichen. Bei entsprechenden Befestigungsabschnitten bzw. -elementen kann es sich z. B. um Formschlussabschnitte bzw. -elemente, d. h. z. B. Vorsprünge und/oder Ausnehmungen, welche ein Verrasten der Bearbeitungseinheit an der vorrichtungsseitigen Funktionseinheit ermöglichen, oder um Kraftschlussabschnitte bzw. -elemente, d. h. z. B. Gewindebohrungen und/oder Gewindebolzen, welche ein Verschrauben der Bearbeitungseinheit an der vorrichtungsseitigen Funktionseinheit ermöglichen, handeln.

Die lösbare Befestigung der Bearbeitungseinheit an einer entsprechenden vorrichtungsseitigen Funktionseinheit ermöglicht ein manuelles oder automatisierbares bzw. automatisiertes Wechseln von Bearbeitungseinheiten. Letzteres verbessert die Automatisierbarkeit der Durchführung von Verfahren zur spanenden Bearbeitung von Werkstücken und erhöht die Funktionsintegrität einer mit der Bearbeitungseinheit ausgestatteten Vorrichtung zur spanenden Bearbeitung von Werkstücken.

Es wurde erwähnt, dass die Bearbeitungseinheit typischerweise ein Gehäuseteil umfasst, an oder in welchem die Funktionskomponenten der Bearbeitungseinheit angeordnet oder ausgebildet sind. Das Gehäuseteil kann ein- oder mehrteilig ausgeführt sein. Bei einer mehrteiligen Ausführung des Gehäuseteils umfasst das Gehäuseteil mehrere zu dem Gehäuseteil zusammensetzbare bzw. im Montagezustand zusammengesetzte Gehäuseteilelemente.

Die wenigstens eine Antriebseinheit, welche entsprechende Funktionskomponente der Bearbeitungseinheit darstellt, kann z. B. an oder in dem Gehäuseteil angeordnet oder ausgebildet sein. Eine Anordnung oder Ausbildung der Antriebseinheit in dem Gehäuseteil, d. h. innerhalb des Gehäuseteils, kann zweckmäßig sein, als die Antriebseinheit vor, z. B. klimatischen oder mechanischen, negativen Einflüssen bzw. Verschmutzungen baulich geschützt ist. Eine Anordnung oder Ausbildung der Antriebseinheit an dem Gehäuseteil, d. h. an einer freiliegenden Außenseite des Gehäuseteils, kann zweckmäßig sein, als die Antriebseinheit, z. B. für Servicearbeiten, gut zugänglich sind. Analoges gilt selbstverständlich für den Fall, in dem die Bearbeitungseinheit mehrere Antriebseinheiten umfasst.

In allen Fällen kann die wenigstens eine Antriebseinheit (beschädigungs- bzw. zerstörungsfrei) lösbar an dem Gehäuseteil befestigt sein. Hierfür können sowohl seitens der Antriebseinheit als auch seitens des Gehäuseteils geeignete Befestigungsabschnitte bzw. -elemente vorhanden sein, welche eine lösbare, z. B. form- und/oder kraftschlüssige, Befestigung der Antriebseinheit an dem Gehäuseteil ermöglicht. Bei entsprechenden Befestigungsabschnitten bzw. - elementen kann es sich wiederum z. B. um Formschlussabschnitte bzw. - elemente, d. h. z. B. Vorsprünge und/oder Ausnehmungen, welche ein Verrasten der Antriebseinheiten an dem Gehäuseteil ermöglichen, oder um Kraftschlussabschnitte bzw. -elemente, d. h. z. B. Gewindebohrungen und/oder Gewindebolzen, welche ein Verschrauben der Antriebseinheiten an dem Gehäuseteil ermöglichen, handeln. Analoges gilt selbstverständlich wiederum für den Fall, in dem die Bearbeitungseinheit mehrere Antriebseinheiten umfasst.

In Ergänzung zu den beschriebenen ersten und zweiten Bewegungsbahnen, in bzw. entlang welcher das Bearbeitungswerkzeug in der Bewegungsebene bewegbar ist, kann das Bearbeitungswerkzeug gegebenenfalls zusätzlich in einer dritten Bewegungsbahn bewegbar sein. Hierzu kann eine weitere Antriebseinheit - d. h. für den Fall, in dem die Bearbeitungseinheit nur eine Antriebseinheit umfasst, eine zweite Antriebseinheit, und für den Fall, in dem die Bearbeitungseinheit zwei Antriebseinheiten umfasst, eine dritte Antriebseinheit - oder eine Gruppe weiterer Antriebseinheiten vorhanden sein, welche zur Bewegung des Bearbeitungswerkzeugs in einer winklig, insbesondere rechtwinklig, zu der durch die erste und zweite Bewegungsbahn definierten Bewegungsebene verlaufenden dritten Bewegungsbahn eingerichtet ist bzw. sind. Bei der dritten Bewegungsbahn handelt es sich typischerweise um eine vertikal ausgerichtete Bewegungsbahn. Bei der dritten Antriebseinheit kann es sich analog der ersten Antriebseinheit (und den gegebenenfalls weiteren Antriebseinheiten) um einen, insbesondere elektrischen, Antriebsmotor handeln bzw. kann diese wenigstens einen solchen umfassen.

Die Vorrichtung umfasst je nach konkreter Ausführung bzw. konkretem Einsatzgebiet sämtliche zur Durchführung einer jeweilig erfolgenden spanenden Bearbeitung erforderlichen Funktionseinheiten. Hierzu kann z. B. eine mit der Bearbeitungseinheit koppelbare oder gekoppelte Vorschubeinrichtung zählen, welche zur Realisierung eines Vorschubs der gesamten Bearbeitungseinheit relativ zu einem zu bearbeitenden Werkstück, d. h. insbesondere entlang der Oberfläche eines zu bearbeitenden Werkstücks, eingerichtet ist. Die Kopplung der Vorschubeinrichtung und der Bearbeitungseinheit ist zweckmäßig über die lösbare Befestigung der Bearbeitungseinheit an der Vorschubeinrichtung, welche durch das beschriebene Zusammenwirken der bearbeitungseinheitseitiger und vorrichtungsseitiger Befestigungsschnittstellen realisiert sein kann, realisiert.

Neben der Vorrichtung betrifft die Erfindung auch ein Verfahren zur spanenden Bearbeitung von Werkstücken. Das Verfahren zeichnet sich dadurch aus, dass zu seiner Durchführung eine wie oben beschriebene Vorrichtung verwendet wird. Mithin gelten sämtliche Ausführungsformen im Zusammenhang mit der Bearbeitungseinheit bzw. der Vorrichtung analog für das Verfahren.

Das Verfahren kann insbesondere zur Ausbildung von Nuten oder nutartigen Oberflächenstrukturierungen, insbesondere mit unterschiedlichen Konturierungen, in der Werkstückoberfläche eines spanend bearbeiteten Werkstücks, d. h. z. B. einer Welle, verwendet werden. Insbesondere lassen sich mit dem Verfahren nahezu beliebige Nutgeometrien, gegebenenfalls mit unterschiedlich konturierten bzw. verlaufenden, Nut(tiefen)abschnitten, d. h. z. B. Hammerkopf-, Schwalbenschwanz- oder Tannenbaumnuten, ausbilden.

Das Verfahren umfasst typischerweise einen ersten Schritt, gemäß welchem ein spanend zu bearbeitendes Werkstück bereitgestellt und in der Vorrichtung befestigt bzw. gehaltert wird, und wenigstens einen weiteren Schritt, gemäß welchem eine spanende Bearbeitung, d. h. z. B. ein Drehen und/oder Fräsen, des zu bearbeitenden Werkstücks erfolgt. Die spanende Bearbeitung des Werkstücks kann verfahrensgemäß selbstverständlich in mehreren Teilschritten erfolgen.

Die Erfindung ist im Weiteren anhand der in den Zeichnungen dargestellten Ausführungsbeispiele erläutert. Dabei zeigen:
- Fig. 1 - 4: je eine Prinzipdarstellung einer Bearbeitungseinheit gemäß einem Ausführungsbeispiel; und
- Fig. 5: eine Prinzipdarstellung einer Vorrichtung gemäß einem Ausführungsbeispiel.

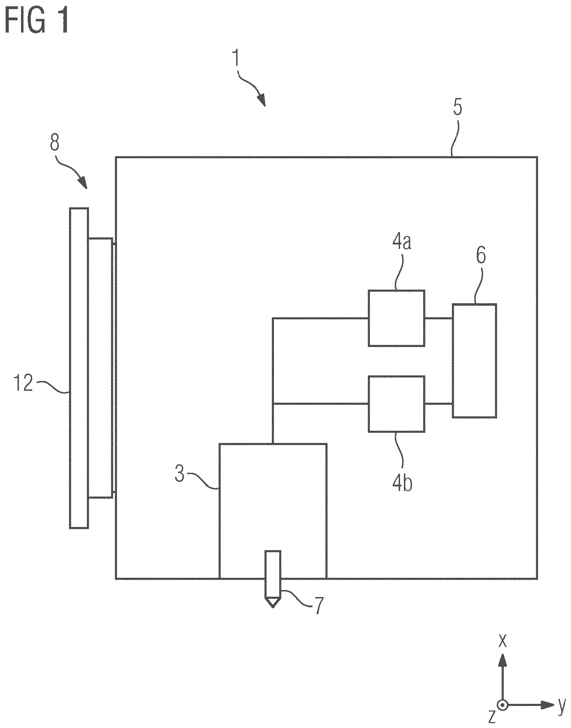

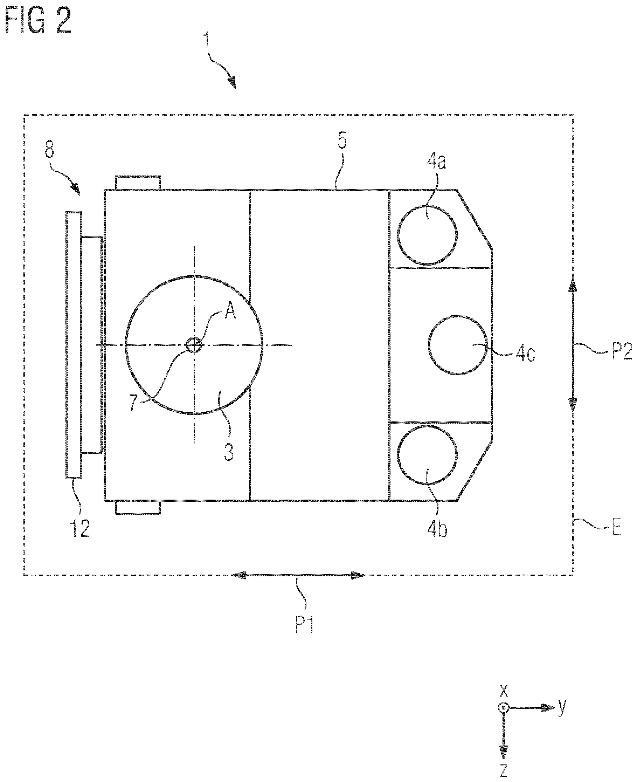

Die Fig. 1, 2 zeigen je eine Prinzipdarstellung einer Bearbeitungseinheit 1 gemäß einem ersten Ausführungsbeispiel. Die Bearbeitungseinheit 1 ist in Fig. 1 in einer Seitenansicht und in Fig. 2 in einer Aufsicht dargestellt.

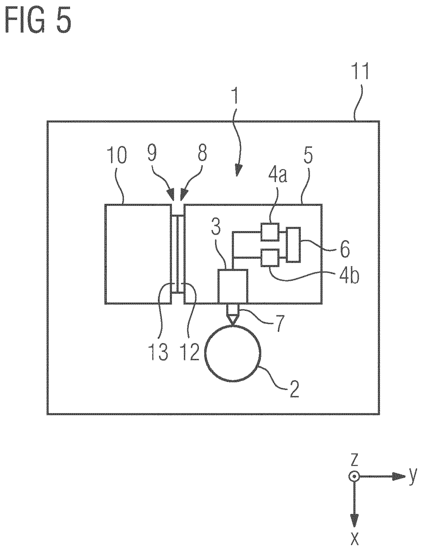

Die Bearbeitungseinheit 1 dient zur spanenden Bearbeitung von Werkstücken 2 (vgl. Fig. 5). Unter dem Begriff "spanende Bearbeitung" ist insbesondere ein Drehen und/oder Fräsen zu verstehen. Bei den mit der Bearbeitungseinheit 1 spanend zu bearbeitenden Werkstücken 2 handelt es sich insbesondere um längliche, insbesondere zylindrische, Bauelemente, wie z. B. Wellenelemente, kurz Wellen, oder um scheibenartige bzw. -förmige Bauelemente. Konkret kann es sich bei dem Werkstück 2 z. B. um ein Rotornabenelement zur Halterung von Turbinenschaufeln handeln, wobei die spanende Bearbeitung zur Ausbildung von, insbesondere tannenbaumartig geformten, Nuten dient. Die Nuten dienen der Halterung von Turbinenschaufeln.

Die Bearbeitungseinheit 1 umfasst ein Bearbeitungswerkzeug 3. Das Bearbeitungswerkzeug 3 ist in einer Bewegungsebene E (vgl. Fig. 2) in einer ersten Bewegungsbahn (vgl. Fig. 2, Doppelpfeil P1) und in einer zu der ersten Bewegungsbahn unterschiedlichen zweiten Bewegungsbahn (vgl. Fig. 2, Doppelpfeil P2), mithin in zwei unterschiedlichen, gleichwohl kombinierbaren, Bewegungsbahnen bewegbar.

Die erste Bewegungsbahn ist eine horizontal ausgerichtete erste lineare Bewegungsachse (vgl. Fig. 1, 2 Koordinatensystem: z-Achse), welche im Betrieb der Bearbeitungseinheit 1 quer zu der Längsachse eines spanend zu bearbeitenden (länglichen) Werkstücks 2 verläuft. Die zweite Bewegungsachse ist ebenso eine horizontal ausgerichtete zweite Bewegungsachse (vgl. Fig. 1, 2 Koordinatensystem; y-Achse), welche im Betrieb der Bearbeitungseinheit 1 jedoch parallel zu der Längsachse des spanend zu bearbeitenden (länglichen) Werkstücks 2 verläuft. Die erste und die zweite Bewegungsbahn bzw. die erste und die zweite Bewegungsachse sind damit rechtwinklig zueinander ausgerichtet bzw. orientiert. An dieser Stelle ist noch zu erwähnen, dass die über eine mit der Bearbeitungseinheit 1 gekoppelte Vorschubeinrichtung realisierbare mögliche Vorschubbewegung der gesamten Bearbeitungseinheit 1 relativ zu dem Werkstück 2 in der in den Fig. 1 - 3 dargestellten z-Achse erfolgt.

Die beiden Bewegungsbahnen bzw. -achsen definieren die Bewegungsebene E, welche aufgrund der Anordnung und Ausrichtung der beiden Bewegungsbahnen bzw. -achsen ebenso horizontal, d. h. parallel zu der Oberfläche des zu bearbeitenden Werkstücks 2, ausgerichtet ist (vgl. Fig. 2).

Wenngleich es sich bei den Bewegungsbahnen in den in den Fig. gezeigten Ausführungsbeispielen jeweils um lineare Bewegungsachsen handelt, ist anzumerken dass die Bewegungsbahnen prinzipiell auch (in der Bewegungsebene) unterschiedlich ausgerichtete bzw. orientierte Bewegungsbahnabschnitte, d. h. beispielsweise zumindest abschnittsweise gebogen bzw. gekrümmt oder zumindest abschnittsweise gewinkelt bzw. schräg verlaufende Bewegungsbahnabschnitte, umfassen können.

Zur Realisierung von Bewegungen des Bearbeitungswerkzeugs 3 umfasst die Bearbeitungseinheit 1 wenigstens zwei, in dem Ausführungsbeispiel gemäß Fig. 2 drei, gesonderte Antriebseinheiten 4a - 4c. Die Antriebseinheiten 4a - 4c sind dem Bearbeitungswerkzeug 3 funktionell zugeordnet und als Funktionskomponenten der Bearbeitungseinheit 1 funktionell in diese integriert. In den in den Fig. 1, 2 gezeigten Ausführungsbeispielen sind die Antriebseinheiten 4a - 4c in dem Gehäuseteil 5, d. h. innerhalb des Gehäuseteils 5, angeordnet. Prinzipiell denkbar ist es jedoch auch, dass die Antriebseinheiten 4a - 4c an dem Gehäuseteil 5, d. h. an einer freiliegenden Außenseite des Gehäuseteils 5, angeordnet sind. In allen Fällen können die Antriebseinheiten 4a - 4c (beschädigungs- bzw. zerstörungsfrei) lösbar an dem Gehäuseteil 5 befestigt sein.

Eine erste Antriebseinheit 4a (vgl. Fig. 1) oder eine Gruppe mehrerer erster Antriebseinheiten 4a, 4b (vgl. Fig. 2) ist/sind (gemeinsam) zur Bewegung des Bearbeitungswerkzeugs 3 in der bzw. entlang ersten Bewegungsachse (erste Bewegungsbahn) eingerichtet. Eine zweite Antriebseinheit 4c ist zur Bewegung des Bearbeitungswerkzeugs 3 in der bzw. entlang zweiten Bewegungsachse (zweite Bewegungsbahn) eingerichtet. Für das Ausführungsbeispiel gemäß Fig. 2 ist selbstverständlich auch eine umgekehrte Konfiguration, d. h. eine erste Antriebseinheit 4a und eine Gruppe zweiter Antriebseinheiten 4c, denkbar.

Die Antriebseinheiten 4a - 4c sind typischerweise als elektrische Antriebsmotoren ausgebildet bzw. umfassen wenigstens einen solchen Antriebsmotor. Bei entsprechenden Antriebsmotoren kann es sich konkret z. B. um Servo- oder Linearmotoren handeln. Die (elektrische) Energieversorgung der Antriebseinheiten 4a - 4c erfolgt über mit diesen verbundene, von einer (elektrischen) Energieversorgungsquelle (nicht gezeigt) ausgehende Energieversorgungsleitungen (nicht gezeigt).

Aus der funktionellen bzw. konstruktiven Integration der Antriebseinheiten 4a - 4c in die Bearbeitungseinheit 1, d. h. konkret in das der Bearbeitungseinheit 1 zugehörige Gehäuseteil 5, an oder in welchem die Funktionskomponenten der Bearbeitungseinheit 1, wie u. a. das Bearbeitungswerkzeug 3, angeordnet oder ausgebildet sind, ergibt sich, dass Bewegungen des Bearbeitungswerkzeugs 3 bezogen auf das "System Bearbeitungseinheit" relativ zu der Bearbeitungseinheit 1 bzw. dem Gehäuseteil 5 erfolgen. Das Bearbeitungswerkzeug 3 ist sonach relativ zu der Bearbeitungseinheit 1 bzw. dem dieser zugehörigen Gehäuseteil 5 in den wenigstens zwei unterschiedlichen Bewegungsbahnen bewegbar. Bewegungen des Bearbeitungswerkzeugs 3 (relativ zu einem zu bearbeiteten Werkstück 2) können damit unabhängig bzw. entkoppelt von gegebenenfalls (zusätzlichen bzw. überlagerten) Bewegungen der gesamten Bearbeitungseinheit 1 (relativ zu einem zu bearbeiteten Werkstück 2) erfolgen. Im Gegensatz zu den typischerweise komplexen, aus einer Kombination der beiden unterschiedlichen Bewegungsbahnen resultierenden, z. B. trochoidalen (trochoiden) bzw. zykloiden, Bewegungen des Bearbeitungswerkzeugs 3 handelt es sich bei einer Bewegung der gesamten Bearbeitungseinheit 1 typischerweise um eine einfache lineare Bewegung zur Realisierung eines Vorschubs der Bearbeitungseinheit 1 entlang einer zu bearbeitenden Werkstückoberfläche. Entsprechende Vorschubbewegungen sind z. B. von Fräsvorgängen bekannt.

Es ist also nicht notwendig, die gesamte Bearbeitungseinheit 1 in komplexe, gegebenenfalls aus einer Kombination der beiden unterschiedlichen Bewegungsbahnen resultierende Bewegungen zu versetzen. Lediglich das Bearbeitungswerkzeug 3 wird in entsprechende Bewegungen versetzt. Die zu bewegenden Massen sind damit erheblich reduziert, was die Realisierung komplexer, gegebenenfalls dynamisch variierender, Bewegungsbahnen bzw. - profile mit hoher Präzision ermöglicht.

Zur Realisierung kombinierter Bewegungen des Bearbeitungswerkzeugs 3 in der Bewegungsebene E ist der Bearbeitungseinheit 1 eine hard- und/oder softwaremäßig implementierte Steuereinrichtung 6 zugeordnet. Die Steuereinrichtung 6 stellt eine Funktionskomponente der Bearbeitungseinheit 1 dar und ist in dem Gehäuseteil 5 angeordnet oder ausgebildet. Die Steuereinrichtung 6 ist hard- und/oder softwaremäßig eingerichtet, die Antriebseinheiten 4a - 4c zur Realisierung kombinierter Bewegungen des Bearbeitungswerkzeugs 3 in der Bewegungsebene E anzusteuern. Bei kombinierten Bewegungen kann es sich insbesondere um trochoidale bzw. zykloide Bewegungen des Bearbeitungswerkzeugs 3 in der Bewegungsebene E handeln. Unter trochoidalen bzw., gegebenenfalls verlängerten, zykloiden Bewegungen des Bearbeitungswerkzeugs 3, d. h. insbesondere eines diesem zugehörigen mit Werkzeugschneiden (nicht näher bezeichnet) versehenen Werkzeugelements 7, sind insbesondere exzentrische kreis- oder kreissegmentförmige Bewegungen des Bearbeitungswerkzeugs 3 zu verstehen. Derartige Bewegungen können wie die Projektion einer gescherten Spirale auf eine Grundfläche verlaufen. Kombinierte Bewegungen können jedoch z. B. auch lineare Anteile beinhalten und sonach z. B. einen Teilkreis, insbesondere Halbkreis, beschreiben.

Das erwähnte Werkzeugelement 7 weist eine längliche Geometrie und somit eine Werkzeugelementlängsachse A auf, um welche es drehbar ist. Zur Realisierung eines spanenden Materialabtrags umfasst das Werkzeugelement 7 eine oder mehrere Werkzeugschneiden (nicht gezeigt). Bei dem Werkzeugelement 7 handelt es sich typischerweise um ein Fräswerkzeug, kurz Fräser, insbesondere um einen Schrupp- oder Schlichtfräser. Die Werkzeugschneiden können zumindest abschnittsweise an Mantel- und/oder Stirnflächen des Werkzeugelements 7 ausgebildet sein. Das Werkzeugelement 7 ist zumindest im Bereich der Werkzeugschneiden aus geeigneten Schneidwerkstoffen, d. h. z. B. Schnellarbeitsstählen, Hartmetallen, Keramik, Diamant oder Bornitrid (CBN), gebildet.

Das Werkzeugelement 7 kann eine kegelartig bzw. -förmig zulaufende oder zylindrische Geometrie bzw. Grundform aufweisen. Ein Werkzeugelement 7 mit einer kegelartig bzw. -förmig zulaufenden Geometrie ist zur Ausbildung von kegelartig bzw. -förmig zulaufenden Nuten bzw. nutartigen Oberflächenstrukturierungen in einem zu bearbeitenden Werkstück 2 zweckmäßig. Das Werkzeugelement 7 kann weiterhin eine oder mehrere in Längsrichtung verjüngte, insbesondere hinterschnittene, oder erweiterte Konturierung(en) aufweisen. Durch eine entsprechende Konturierung des Werkzeugelements 7 lassen sich konturierte Nuten bzw. nutartige Oberflächenstrukturierungen in dem zu bearbeitenden Werkstück 2 ausbilden. In Kombination mit der kegelartig bzw. -förmig zulaufenden Geometrie des Werkzeugelements 7 lassen sich mit dem Werkzeugelement 7 tannenbaum- oder schwalbenschwanzförmige Strukturen, d. h. sogenannte Tannenbaum- oder Schwalbenschwanznuten, realisieren z. B. zur Herstellung von Rotornabenelementen zur Halterung von Turbinenschaufeln.

Anhand der Fig. 1, 2 ist ersichtlich, dass die Bearbeitungseinheit 1 eine, insbesondere flanschartig ausgebildete, Befestigungsschnittstelle 8 zur (beschädigungs- bzw. zerstörungsfrei) lösbaren Befestigung der Bearbeitungseinheit 1 an einer, insbesondere korrespondierenden, Befestigungsschnittstelle 9 einer Funktionseinheit 10 einer die Bearbeitungseinheit 1 aufnehmenden Vorrichtung 11 zur spanenden Bearbeitung von Werkstücken 2 aufweist. In dem in Fig. 5 gezeigten Ausführungsbeispiel handelt es sich bei der vorrichtungsseitigen Funktionseinheit 10 um eine Vorschubeinrichtung (nicht näher bezeichnet) zur Realisierung eines Vorschubs der Bearbeitungseinheit 1 entlang der Oberfläche des bzw. eines zu bearbeitenden Werkstücks 2. Durch die Lösbarkeit der Befestigung ist eine einfache und schnelle Montage bzw. Demontage der gesamten Bearbeitungseinheit 1 an bzw. von der Vorrichtung 11 bzw. der vorrichtungsseitigen Funktionseinheit 10, d. h. ein einfacher und schneller Austausch bzw. Wechsel von Bearbeitungseinheiten 1 möglich. Die lösbare Befestigung der Bearbeitungseinheit 1 an einer entsprechenden vorrichtungsseitigen Funktionseinheit 10 ermöglicht ein automatisierbares bzw. automatisiertes Wechseln von Bearbeitungseinheiten 1.

Die Bearbeitungseinheit 1 kann über das Zusammenwirken der bearbeitungseinheitseitigen Befestigungsschnittstelle 8 mit der vorrichtungsseitigen Befestigungsschnittstelle 9 form- und/oder kraftschlüssig an der Funktionseinheit 10 der Vorrichtung 11 befestigt sein. Seitens der jeweiligen Befestigungsschnittstellen 8, 9 sind hierfür Befestigungsabschnitte bzw. - elemente 12, 13 vorhanden, welche eine lösbare, z. B. form- und/oder kraftschlüssige, Befestigung der Bearbeitungseinheit 1 an der vorrichtungsseitigen Funktionseinheit 10 ermöglichen. Bei entsprechenden Befestigungsabschnitten 12, 13 bzw. -elementen kann es sich um Formschlussabschnitte, d. h. z. B. Vorsprünge und/oder Ausnehmungen, welche ein Verrasten der Bearbeitungseinheit 1 an der vorrichtungsseitigen Funktionseinheit 10 ermöglichen, oder um Kraftschlussabschnitte, d. h. z. B. Gewindebohrungen und/oder Gewindebolzen, welche ein Verschrauben der Bearbeitungseinheit 1 an der vorrichtungsseitigen Funktionseinheit 10 ermöglichen, handeln.

Wenngleich in den Fig. 1, 2 nicht gezeigt, kann das Bearbeitungswerkzeug 3 in Ergänzung zu den beschriebenen ersten und zweiten Bewegungsbahnen, in bzw. entlang welcher das Bearbeitungswerkzeug 3 in der Bewegungsebene E bewegbar ist, gegebenenfalls zusätzlich in einer dritten Bewegungsbahn bewegbar sein. Hierzu kann eine zusätzliche Antriebseinheit (nicht gezeigt) vorhanden sein, welche zur Bewegung des Bearbeitungswerkzeugs 3 in einer winklig, insbesondere rechtwinklig, zu der Bewegungsebene E verlaufenden dritten Bewegungsbahn eingerichtet ist. Bei der dritten Bewegungsbahn handelt es sich typischerweise um eine vertikal ausgerichtete Bewegungsbahn (x-Richtung).

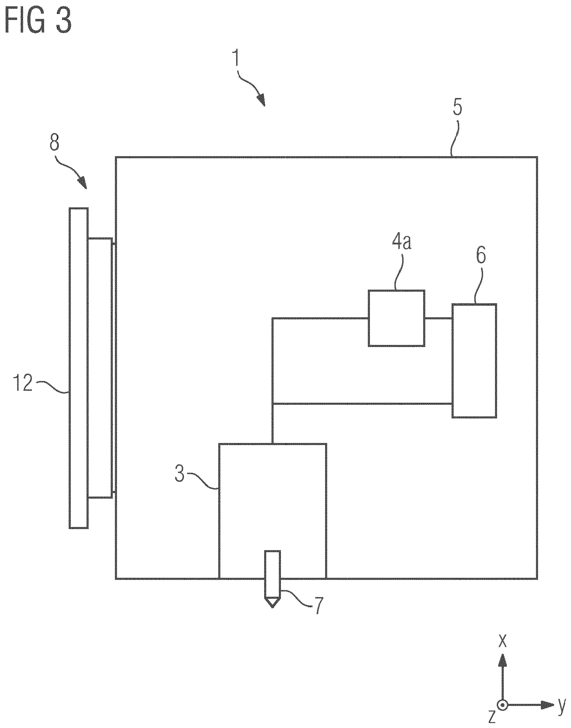

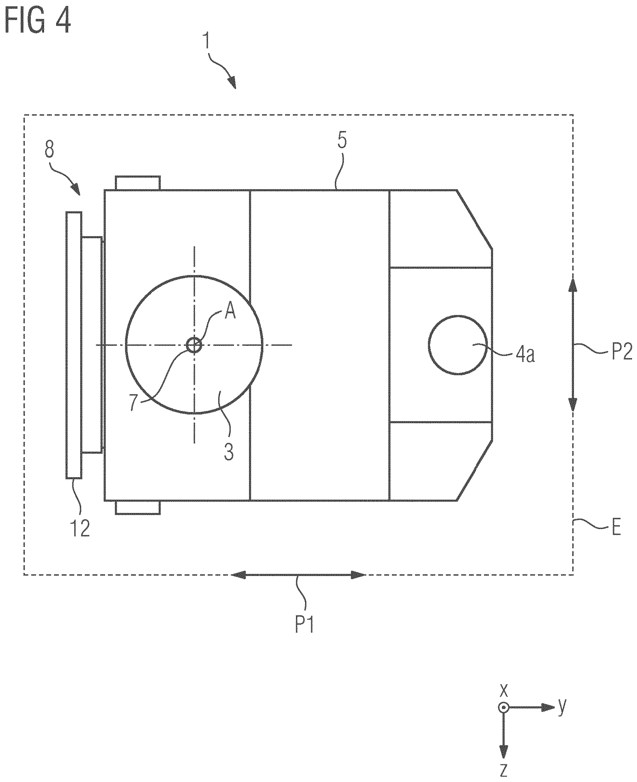

Die Fig. 3, 4 zeigen je eine Prinzipdarstellung einer Bearbeitungseinheit 1 gemäß einem zweiten Ausführungsbeispiel. Die Bearbeitungseinheit 1 ist in Fig. 3 in einer Seitenansicht und in Fig. 4 in einer Aufsicht dargestellt.

Im Unterschied zu dem in den Fig. 1, 2 gezeigten ersten Ausführungsbeispiel umfasst die Bearbeitungseinheit 1 gemäß dem zweiten Ausführungsbeispiel nur eine (einzige) Antriebseinheit 4a. Die Antriebseinheit 4a ist zur, insbesondere kombinierten, Bewegung des Bearbeitungswerkzeugs 3 in einer ersten Bewegungsbahn und in einer von der ersten Bewegungsbahn unterschiedlichen zweiten Bewegungsbahn eingerichtet. Die Antriebseinheit 4a, welche z. B. als Flächenmotor, welcher zur Bewegung des Bearbeitungswerkzeugs in zwei unterschiedlichen Bewegungsbahnen eingerichtet ist, ausgebildet ist, übernimmt daher die Funktion der zwei gesonderten Antriebseinheiten 4a - 4c gemäß dem ersten Ausführungsbeispiel, sodass die Ausführungen im Zusammenhang mit dem ersten Ausführungsbeispiel analog für das zweite Ausführungsbeispiel gelten. Das Bearbeitungswerkzeug 3 gemäß dem zweiten Ausführungsbeispiel lässt sich sonach analog dem Bearbeitungswerkzeug 3 gemäß dem ersten Ausführungsbeispiel in der Bearbeitungsebene E bewegen.

Fig. 5 zeigt eine Prinzipdarstellung einer Vorrichtung 11 zur spanenden Bearbeitung, insbesondere zum Drehen und/oder Fräsen, von, insbesondere länglichen, Werkstücken 2, insbesondere Wellen, zur Ausbildung von Nuten oder nutartigen Oberflächenstrukturierungen in der Werkstückoberfläche eines jeweiligen Werkstücks 2 in einer Seitenansicht analog Fig. 1. Bei der Vorrichtung 11 kann es sich z. B. um eine Fräsanlage bzw. -maschine handeln. Die Vorrichtung 11 umfasst eine Bearbeitungseinheit 1.

Eine Funktionseinheit 10 der Vorrichtung 11 ist eine mit der Bearbeitungseinheit 1 gekoppelte Vorschubeinrichtung (nicht näher bezeichnet), welche zur Realisierung eines Vorschubs (z-Richtung) der gesamten Bearbeitungseinheit 1 relativ zu einem zu bearbeitenden Werkstück 2, d. h. insbesondere entlang der Oberfläche des zu bearbeitenden Werkstücks 2, eingerichtet ist. Die Kopplung der Vorschubeinrichtung und der Bearbeitungseinheit 1 ist über die lösbare Befestigung der Bearbeitungseinheit 1 an der Vorschubeinrichtung, welche durch das beschriebene Zusammenwirken der bearbeitungseinheitseitiger und vorrichtungsseitiger Befestigungsschnittstellen 8, 9 realisiert ist, realisiert.

Mit der Bearbeitungseinheit 1 bzw. der Vorrichtung 11 lässt sich ein Verfahren zur spanenden Bearbeitung von Werkstücken 2 implementieren. Das Verfahren kann insbesondere zur Ausbildung von Nuten oder nutartigen Oberflächenstrukturierungen, insbesondere mit unterschiedlichen Konturierungen, in der Werkstückoberfläche eines spanend bearbeiteten Werkstücks 2, d. h. z. B. einer Welle, verwendet werden. Mit dem Verfahren lassen sich nahezu beliebige Nutgeometrien, gegebenenfalls mit unterschiedlich konturierten bzw. verlaufenden, Nut(tiefen)abschnitten, d. h. z. B. Hammerkopf-, Schwalbenschwanz- oder Tannenbaumnuten, ausbilden.

Das Verfahren umfasst typischerweise einen ersten Schritt, gemäß welchem ein spanend zu bearbeitendes Werkstück 2 bereitgestellt und in der Vorrichtung 11 befestigt bzw. gehaltert wird, und wenigstens einen weiteren Schritt, gemäß welchem eine spanende Bearbeitung, d. h. z. B. ein Drehen und/oder Fräsen, des zu bearbeitenden Werkstücks 2 erfolgt. Die spanende Bearbeitung des Werkstücks 2 kann verfahrensgemäß in mehreren Teilschritten erfolgen.

## Patentansprüche

1. Vorrichtung (11) zur spanenden Bearbeitung von, insbesondere länglichen, Werkstücken (2) zur Ausbildung von Nuten oder nutartigen Oberflächenstrukturierungen in der Werkstückoberfläche, umfassend:
- eine Bearbeitungseinheit (1) zur spanenden Bearbeitung von, insbesondere länglichen, Werkstücken (2) und
- eine mit der Bearbeitungseinheit (1) koppelbare oder gekoppelte Vorschubeinrichtung, welche zur Realisierung eines Vorschubs der Bearbeitungseinheit (1) entlang der Oberfläche eines zu bearbeitenden Werkstücks (2) eingerichtet ist, wobei
die Bearbeitungseinheit (1) umfasst
-- ein Gehäuseteil (5), an oder in welchem Funktionskomponenten der Bearbeitungseinheit (1) angeordnet oder ausgebildet sind,
-- ein Bearbeitungswerkzeug (3), wobei das Bearbeitungswerkzeug (3) in einer Bewegungsebene (E) in wenigstens zwei unterschiedlichen, kombinierten Bewegungsbahnen bewegbar ist, wobei das Bearbeitungswerkzeug (3) in trochoidalen oder zykloiden Bewegungen in der Bewegungsebene (E) bewegbar ist, wobei
das Bearbeitungswerkzeug (3) in dem Gehäuseteil (5) angeordnet ist;
-- wenigstens eine Antriebseinheit (4a), welche zur kombinierten Bewegung des Bearbeitungswerkzeugs (3) in einer ersten Bewegungsbahn und in einer von der ersten Bewegungsbahn unterschiedlichen zweiten Bewegungsbahn eingerichtet ist, wobei die wenigstens eine Antriebseinheit (4a - 4c) an oder in dem Gehäuseteil (5) angeordnet ist, wobei
das Bearbeitungswerkzeug (3) relativ zu dem Gehäuseteil (5) in den wenigstens zwei unterschiedlichen, kombinierten Bewegungsbahnen bewegbar ist, sodass Bewegungen des Bearbeitungswerkzeugs (3) relativ zu einem zu bearbeiteten Werkstück (2) unabhängig oder entkoppelt von Bewegungen der gesamten Bearbeitungseinheit (1) relativ zu dem zu bearbeiteten Werkstück (2) erfolgen können;
-- eine Steuereinrichtung (6), welche eingerichtet ist, die wenigstens eine Antriebseinheit (4a) zur Realisierung von kombinierten Bewegungen des Bearbeitungswerkzeugs (3) in der Bewegungsebene (E) anzusteuern, wobei es sich bei den kombinierten Bewegungen um die trochoidalen oder zykloiden Bewegungen des Bearbeitungswerkzeugs (3) in der Bewegungsebene (E) handelt.

2. Vorrichtung nach Anspruch 1, **dadurch gekennzeichnet, dass** die Bearbeitungseinheit (1) wenigstens zwei gesonderte Antriebseinheiten (4a - 4c) umfasst, wobei wenigstens eine erste Antriebseinheit (4a, 4b) zur Bewegung des Bearbeitungswerkzeugs (3) in einer ersten Bewegungsbahn eingerichtet ist und wenigstens eine zweite Antriebseinheit (4c) zur Bewegung des Bearbeitungswerkzeugs (3) in einer von der ersten Bewegungsbahn unterschiedlichen zweiten Bewegungsbahn eingerichtet ist.

3. Vorrichtung nach einem der vorhergehenden Ansprüche, **dadurch gekennzeichnet, dass** die erste Bewegungsbahn eine lineare, insbesondere quer zu einer Längsachse eines spanend zu bearbeitenden Werkstücks (2) verlaufende erste Bewegungsachse ist, wobei die erste Antriebseinheit (4a, 4b) eingerichtet ist, das Bearbeitungswerkzeug (3) in der ersten Bewegungsachse zu bewegen, und
die zweite Bewegungsbahn eine lineare, insbesondere parallel zu einer Längsachse eines spanend zu bearbeitenden Werkstücks (2) verlaufende zweite Bewegungsachse ist, wobei die zweite Antriebseinheit (4c) eingerichtet ist, das Bearbeitungswerkzeug (3) in der zweiten Bewegungsachse zu bewegen.

4. Vorrichtung nach einem der vorhergehenden Ansprüche, **dadurch gekennzeichnet, dass** das Bearbeitungswerkzeug (3) wenigstens ein um eine Werkzeugelementachse (A) drehbares, wenigstens eine Werkzeugschneide umfassendes Werkzeugelement (7) umfasst.

5. Vorrichtung nach Anspruch 4, **dadurch gekennzeichnet, dass** das Werkzeugelement (7) eine längliche, insbesondere kegelartig zulaufende oder zylindrische, Geometrie aufweist.

6. Vorrichtung nach Anspruch 4 oder 5, **dadurch gekennzeichnet, dass** das Werkzeugelement (7) wenigstens eine in Längsrichtung verjüngte, insbesondere hinterschnittene, oder erweiterte Konturierung aufweist.

7. Vorrichtung nach einem der vorhergehenden Ansprüche, **gekennzeichnet durch** wenigstens eine, insbesondere flanschartig ausgebildete, Befestigungsschnittstelle (8) zur lösbaren Befestigung der Bearbeitungseinheit (1) an einer, insbesondere korrespondierenden, Befestigungsschnittstelle (9) einer Funktionseinheit (10), insbesondere der Vorschubeinrichtung zur Realisierung eines Vorschubs der Bearbeitungseinheit (1) entlang der Oberfläche eines zu bearbeitenden Werkstücks (2), der die Bearbeitungseinheit (1) aufnehmenden Vorrichtung (11).

8. Vorrichtung nach einem der vorhergehenden Ansprüche, **dadurch gekennzeichnet, dass** die wenigstens eine Antriebseinheit (4a), insbesondere erste und die zweite Antriebseinheit (4a - 4c) jeweils, als, insbesondere elektrischer, Antriebsmotor ausgebildet ist oder wenigstens einen, insbesondere elektrischen, Antriebsmotor umfasst.

9. Vorrichtung nach einem der vorhergehenden Ansprüche, **gekennzeichnet durch** eine weitere, insbesondere zweite oder vierte, Antriebseinheit, welche zur Bewegung des Bearbeitungswerkzeugs (3) in einer winklig, insbesondere rechtwinklig, zu der durch die erste und zweite Bewegungsbahn definierten Bewegungsebene (E) verlaufenden dritten Bewegungsachse eingerichtet ist.

10. Verfahren zur spanenden Bearbeitung von Werkstücken (2) zur Ausbildung von Nuten oder nutartigen Oberflächenstrukturierungen, insbesondere mit unterschiedlichen Konturierungen, in der Werkstückoberfläche eines spanend bearbeiteten Werkstücks (2), **dadurch gekennzeichnet, dass** zur Durchführung des Verfahrens eine Vorrichtung (11) nach einem der vorhergehenden Ansprüche verwendet wird.

## Claims

1. Device (11) for machining of, in particular elongated, workpieces (2) for forming grooves or groove-like surface structurings in the surface of the workpiece, comprising:
- a machining unit (1) for machining of, in particular elongated, workpieces (2) and
- a feed device, which can be or is coupled to the machining unit (1) and is adapted to realise a feed of the machining unit (1) along the surface of a workpiece (2) to be machined, wherein
the machining unit (1) comprises
-- a housing part (5), on or in which functional components of the machining unit (1) are arranged or formed,
-- a machining tool (3), wherein the machining tool (3) is movable in a movement plane (E) in at least two different, combined movement paths, wherein the machining tool (3) is movable in trochoidal or cycloid movements in the movement plane (E), wherein
the machining tool (3) is arranged in the housing part (5);
-- at least one drive unit (4a), which is adapted for combined movement of the machining tool (3) in a first movement path and in a second movement path different from the first movement path, wherein
the at least one drive unit (4a - 4c) is arranged on or in the housing part (5), wherein
the machining tool (3) is movable relative to the housing part (5) in the at least two different, combined movement paths, so that movements of the machining tool (3) relative to a workpiece (2) to be machined can take place independently or decoupled from movements of the overall machining unit (1) relative to the workpiece (2) to be machined;
-- a control device (6), which is adapted to control the at least one drive unit (4a) to realise combined movements of the machining tool (3) in the movement plane (E), wherein the combined movements are the trochoidal or cycloid movements of the machining tool (3) in the movement plane (E).

2. Device according to claim 1, **characterised in that** the machining unit (1) comprises at least two separate drive units (4a - 4c), wherein at least a first drive unit (4a, 4b) is adapted to move the machining tool (3) in a first movement path and at least a second drive unit (4c) is adapted to move the machining tool (3) in a second movement path different from the first movement path.

3. Device according to one of the preceding claims, **characterised in that** the first movement path is a linear, first movement axis running in particular transversely to a longitudinal axis of a workpiece (2) to be machined, wherein the first drive unit (4a, 4b) is adapted to move the machining tool (3) in the first movement axis, and
the second movement path is a linear, second movement axis running in particular parallel to a longitudinal axis of a workpiece (2) to be machined, wherein the second drive unit (4c) is adapted to move the machining tool (3) in the second movement axis.

4. Device according to any one of the preceding claims, **characterised in that** the machining tool (3) comprises at least one tool element (7) which is rotatable about a tool element axis (A) and comprises at least one tool blade.

5. Device according to claim 4, **characterised in that** the tool element (7) has a geometry which is elongated, in particular cone-shaped or cylindrical.

6. Device according to claim 4 or 5, **characterised in that** the tool element (7) has at least one contouring which is tapered in a longitudinal direction, in particular undercut, or is expanded.

7. Device according to any one of the preceding claims, **characterised by** at least one attachment interface (8), formed in particular in the manner of a flange, for detachable attachment of the machining unit (1) to an, in particular corresponding, attachment interface (9) of a functional unit (10), in particular of the feed device for realising a feed of the machining unit (1) along the surface of a workpiece (2) to be machined, of the device (11) taking up the machining unit (1).

8. Device according to any one of the preceding claims, **characterised in that** the at least one drive unit (4a), in particular the first and the second drive unit (4a - 4c), is formed respectively as a, in particular electric, drive motor or comprises at least one, in particular electric, drive motor.

9. Device according to any one of the preceding claims, **characterised by** another, in particular second or fourth, drive unit, which is adapted to move the machining tool (3) in a third movement axis running at an angle, in particular at a right angle, to the movement plane (E) defined by the first and second movement path.

10. Method for machining workpieces (2) to form grooves or groove-like surface structurings, in particular with different contourings, in the workpiece surface of a machined workpiece (2), **characterised in that** a device (11) according to any one of the preceding claims is used perform the method.

## Revendications

1. Dispositif (11) pour usiner par enlèvement de copeaux des pièces (2), en particulier allongées, pour réaliser des rainures ou des structurations de surface de type rainure, comprenant :
- une unité d'usinage (1) pour usiner par enlèvement de copeaux des pièces (2), en particulier allongées, et
- un système d'avancement pouvant être couplé ou couplé à l'unité d'usinage (1), lequel est mis au point pour réaliser un avancement de l'unité d'usinage (1) le long de la surface d'une pièce (2) à usiner, dans lequel l'unité d'usinage (1) comprend
- - une partie de boîtier (5), sur laquelle ou dans laquelle des composants fonctionnels de l'unité d'usinage (1) sont disposés ou réalisés,
- - un outil d'usinage (3), dans lequel l'outil d'usinage (3) peut être déplacé dans un plan de déplacement (E) suivant au moins deux trajectoires de déplacement combinées différentes, dans lequel l'outil d'usinage (3) peut être déplacé dans le plan de déplacement (E) en des déplacements trochoïdaux ou cycloïdaux, dans lequel
l'outil d'usinage (3) est disposé dans la partie de boîtier (5) ;
- - au moins une unité d'entraînement (4a), laquelle est mise au point pour le déplacement combiné de l'outil d'usinage (3) suivant une première trajectoire de déplacement et suivant une deuxième trajectoire de déplacement différente de la première trajectoire de déplacement, dans lequel
l'au moins une unité d'entraînement (4a - 4c) est disposée sur ou dans la partie de boîtier (5), dans lequel
l'outil d'usinage (3) peut être déplacé par rapport à la partie de boîtier (5) suivant les au moins deux trajectoires de déplacement combinées différentes si bien que des déplacements de l'outil d'usinage (3) par rapport à une pièce (2) à usiner peuvent avoir lieu indépendamment ou de manière découplée de déplacements de l'ensemble de l'unité d'usinage (1) par rapport à la pièce (2) à usiner ;
- - un système de commande (6), lequel est mis au point pour piloter l'au moins une unité d'entraînement (4a) pour réaliser des déplacements combinés de l'outil d'usinage (3) dans le plan de déplacement (E), dans lequel les déplacements combinés sont les déplacements trochoïdaux ou cycloïdaux de l'outil d'usinage (3) dans le plan de déplacement (E).

2. Dispositif selon la revendication 1, **caractérisé en ce que** l'unité d'usinage (1) comprend au moins deux unités d'entraînement (4a - 4c) séparées, dans lequel au moins une première unité d'entraînement (4a, 4b) est mise au point pour le déplacement de l'outil d'usinage (3) suivant une première trajectoire de déplacement et au moins une deuxième unité d'entraînement (4c) est mise au point pour le déplacement de l'outil d'usinage (3) suivant une deuxième trajectoire de déplacement différente de la première trajectoire de déplacement.

3. Dispositif selon l'une quelconque des revendications précédentes, **caractérisé en ce que** la première trajectoire de déplacement est un premier axe de déplacement linéaire s'étendant en particulier de manière transversale par rapport à un axe longitudinal d'une pièce (2) à usiner par enlèvement de copeaux, dans lequel la première unité d'entraînement (4a, 4b) est mise au point pour déplacer l'outil d'usinage (3) dans le premier axe de déplacement, et la deuxième trajectoire de déplacement est un deuxième axe de déplacement linéaire s'étendant en particulier de manière parallèle par rapport à un axe longitudinal d'une pièce (2) à usiner par enlèvement de copeaux, dans lequel la deuxième unité d'entraînement (4c) est mise au point pour déplacer l'outil d'usinage (3) dans le deuxième axe de déplacement.

4. Dispositif selon l'une quelconque des revendications précédentes, **caractérisé en ce que** l'outil d'usinage (3) comprend au moins un élément d'outil (7) pouvant tourner autour d'un axe d'élément d'outil (A), comprenant au moins un tranchant d'outil.

5. Dispositif selon la revendication 4, **caractérisé en ce que** l'élément d'outil (7) présente une géométrie allongée, convergeant en particulier à la manière d'un cône ou cylindrique.

6. Dispositif selon la revendication 4 ou 5, **caractérisé en ce que** l'élément d'outil (7) présente au moins un contourage rétréci dans le sens longitudinal, en particulier contre-dépouillé, ou élargi.

7. Dispositif selon l'une quelconque des revendications précédentes, **caractérisé par** au moins une interface de fixation (8) réalisée en particulier à la manière d'une bride pour fixer de manière amovible l'unité d'usinage (1) sur une interface de fixation (9) en particulier correspondante d'une unité fonctionnelle (10), en particulier du système d'avancement pour réaliser un avancement de l'unité d'usinage (1) le long de la surface d'une pièce (2) à usiner, du dispositif (11) logeant l'unité d'usinage (1).

8. Dispositif selon l'une quelconque des revendications précédentes, **caractérisé en ce que** l'au moins une unité d'entraînement (4a), en particulier la première et la deuxième unité d'entraînement (4a - 4c), sont réalisées respectivement en tant qu'un moteur d'entraînement en particulier électrique ou comprennent au moins un moteur d'entraînement en particulier électrique.

9. Dispositif selon l'une quelconque des revendications précédentes, **caractérisé par** une autre unité d'entraînement, en particulier une deuxième ou une quatrième, laquelle est mise au point pour le déplacement de l'outil d'usinage (3) dans un troisième axe de déplacement s'étendant de manière angulaire, en particulier à angle droit, par rapport au plan de déplacement (E) défini par la première et la deuxième trajectoire de déplacement.

10. Procédé pour usiner par enlèvement de copeaux des pièces (2) pour réaliser des rainures ou des structurations de surface de type rainure en particulier avec des contourages différents, dans la surface de pièce d'une pièce (2) usinée par enlèvement de copeaux, **caractérisé en ce qu'**un dispositif (11) selon l'une quelconque des revendications précédentes est utilisé pour mettre en oeuvre le procédé.
